# EUROPEAN PATENT SPECIFICATION

(11) **EP 2 846 481 B1**
(45) Date of publication and mention of the grant of the patent: **17.06.2020**
(21) Application number: 13781384.6
(22) Date of filing: 28.02.2013
(51) Int. Cl.: H04B 10/90

(54) **MULTIMEDIA STREAM TRANSMISSION METHOD AND SYSTEM BASED ON TERAHERTZ WIRELESS COMMUNICATION**
MULTIMEDIA-STREAM-ÜBERTRAGUNGSVERFAHREN UND SYSTEM AUF BASIS EINER DRAHTLOSEN TERAHERTZ-KOMMUNIKATION
PROCÉDÉ ET SYSTÈME DE TRANSMISSION DE FLUX MULTIMÉDIA BASÉE SUR LA COMMUNICATION SANS FIL PAR ONDES TÉRAHERTZIENNES

(30) Priority: 24.04.2012 CN 201210121661
(43) Date of publication of application: 11.03.2015
(73) Proprietor: Huizhou TCL Mobile Communication Co., Ltd., Huizhou, Guangdong 516006 (CN)
(72) Inventor: WANG, Kailong, HuiZhou Guangdong 516006 (CN); LI, Xianglai, HuiZhou Guangdong 516006 (CN); GE, Qi, HuiZhou Guangdong 516006 (CN)
(74) Representative: Brachmann, Roland W.
(86) International application number: PCT/CN2013/071995
(87) International publication number: WO 2013/159594

(56) References cited:
- WO-A1-2011/137100
- CN-A- 101 325 457
- CN-A- 102 148 641
- CN-A- 102 638 726
- US-A1- 2004 045 030
- US-A1- 2011 317 772
- HO-JIN SONG ET AL: "Present and Future of Terahertz Communications", IEEE TRANSACTIONS ON TERAHERTZ SCIENCE AND TECHNOLOGY, IEEE, PISCATAWAY, NJ, USA, vol. 1, no. 1, 1 September 2011 (2011-09-01), pages 256-263, XP011382547, ISSN: 2156-342X, DOI: 10.1109/TTHZ.2011.2159552
- THOMAS KLEINE-OSTMANN ET AL: "A Review on Terahertz Communications Research", JOURNAL OF INFRARED, MILLIMETER, AND TERAHERTZ WAVES, SPRINGER US, BOSTON, vol. 32, no. 2, 11 January 2011 (2011-01-11), pages 143-171, XP019879108, ISSN: 1866-6906, DOI: 10.1007/S10762-010-9758-1

## Description

The present invention relates to the field of information technology, and in particular to a multimedia stream transmission method and a system based on terahertz wireless communication.

It is a widely used function of a multimedia device to transmit shared video output to an external screen, for example, sharing of screen between a mobile terminal, a television and a projector. In traditional multimedia stream shared transmission modes, usually a laptop computer/smartphone is connected to a projector/ display device through a VGA/HDMI/AV cable in order to transmit a video signal.

However, the traditional shared transmission modes have the following defects that: excluding some high-end HDMI interfaces, the picture quality transmission ability of VGA and AV are very limited; a video interface is not beneficial for optimizing a product appearance structure; and use of the cable also brings inconvenience to a user. While for the multimedia stream shared transmission mode based on wireless communication currently, wireless frequency bands are generally integrated in GHz. The wireless transmission ability in this wireless frequency band is limited, which may sacrifice the quality of the multimedia stream and cause time delay.

Ho-Jin Song and Tadao Nagatsuma: "Present and Future of Terahertz Communications", IEEE Transactions on Terahertz Science and Technology, vol. 1, no. 1, September 2011, discloses that recent changes in how people consume multimedia services are causing an explosive increase in mobile traffic. With more and more people using wireless networks, the demand for the ultra-fast wireless communications systems is increasing. To date, this demand has been accommodated with advanced modulation schemes and signal-processing technologies at microwave frequencies. However, without increasing the carrier frequencies for more spectral resources, it may be quite difficult to keep up with the needs of users. Although there are several alternative bands, recent advances in terahertz-wave (THz-wave) technologies have attracted attention due to the huge bandwidth of THz waves and its potential for use in wireless communications. The frequency band of approx. 275 GHz to approx. 3000 GHz, which has not been allocated for specific uses yet, is especially of interest for future wireless systems with data rates of 10 Gb/s or higher. Although THz communications is still in a very early stage of development, there have been lots of reports that show its potential. In this review, the current progress of THz-wave technologies is examined related to communications applications and some issues are discussed that need to be considered for the future of THz communications.

US 2011/0317772 A1 discloses that regarding an apparatus capable of transmitting data using a high-rate transmission channel having narrow directivity and a low-rate transmission channel having wide directivity, data is not correctly sent in some cases because a communication path for the high-rate transmission channel is easily interrupted. In contrast, paths for the low-rate transmission channel are less likely to be interrupted than a path for the high-rate transmission channel. Compressed data is transmitted via the low-rate transmission channel, and loss data that is lost by compression is transmitted via the high-rate transmission channel. An apparatus on a reception side combines, with the loss data, data that is obtained by decompressing the compressed data, and output the combined data. When the loss data cannot be received, the apparatus outputs the data that is obtained by decompressing the compressed data.

Thomas Kleine-Ostmann and Tadao Nagatsuma: "A Review on Terahertz Communications Research", J Infrared Milli Terahz Waves (2011) vol. 32, pp. 143 - 171; published online: 1 1 January 2011, discloses the increasing demand of unoccupied and unregulated bandwidth for wireless communication systems that will inevitably lead to the extension of operation frequencies toward the lower THz frequency range. Higher carrier frequencies will allow for fast transmission of huge amounts of data as needed for new emerging applications. Despite the tremendous hurdles that have to be overcome with regard to sources and detectors, circuit and antenna technology and system architecture to realize ultrafast data transmission in a scenario with extensive transmission loss, a new area of research is beginning to form. In this article is given an overview of emerging technologies and system research that might lead to ubiquitous THz communication systems in the future.

Therefore, the prior art still needs to be improved and developed.

In view of the foregoing defects of the prior art, the present invention aims at providing a multimedia stream transmission method and a system based on terahertz wireless communication in order to solve the problems of the existing multimedia stream shared transmission mode, such as limited ability to deliver picture quality, disadvantages for optimizing product structure, and inconvenience to users.

This problem is solved according to the features of the independent claim(s). Further embodiments result from the depending claims.

The technical solution of the present invention is as follows:
A multimedia stream transmission method based on terahertz wireless communication, comprises the following steps of:
S1. processing, by a media providing device, a multimedia stream into a data packet suitable for terahertz wireless signal transmission, and sending the data packet from the first terahertz communication interface drive to the first terahertz transceiver, wherein the first terahertz transceiver externally broadcasts the data packet through a terahertz wireless signal;
S2. receiving, by a media receiving device, the terahertz wireless signal broadcast through the second terahertz transceiver, and acquiring the data packet, wherein after the second terahertz transceiver sends the data packet to the second terahertz communication interface drive, the media receiving device processes the data packet into a playable multimedia stream.

In an embodiment, the step S1 further comprises the step of:
S11. decoding, by the media providing device, the multimedia stream through the first multimedia codec library, and packing the multimedia stream into a data packet suitable for terahertz wireless signal transmission through the first terahertz communication protocol after recoding.

In an embodiment, the step S2 further comprises the steps of:
S22. reading, by the second terahertz communication interface drive, the data packet, wherein after the read data packet is unpacked and corrected by the second terahertz communication protocol stack, the read data packet is decoded and translated into a required image frame by the second multimedia codec library; and
S23. translating the image frame, after being drawn by a graphics engine and processed by a display drive, into a playable multimedia stream.

In an embodiment, the method further comprises a handshake stage before the step S1, which comprises the following steps of:
R1. searching, by the media receiving device, an available media providing device through the terahertz wireless signal;
R2. receiving, by the media receiving device, an available answering instruction sent out by the media providing device;
R3. sending out, by the media receiving device, an authentication code verification instruction to the media providing device; and
R4. receiving, by the media receiving device, an authentication code answering instruction sent out by the media providing device, and verifying the authentication code.

In an embodiment, the media receiving device is a terminal device having a screen display device.

A multimedia stream transmission method based on terahertz wireless communication, comprises the following steps of:
S1. processing, by a media providing device, a multimedia stream into a data packet suitable for terahertz wireless signal transmission, and externally broadcasting the data packet through a terahertz wireless signal; and
S2. receiving, by a media receiving device, the data packet through a terahertz wireless signal, and processing the data packet into a playable multimedia stream.

In an embodiment, the step S1 specifically comprises the steps of:
S11. decoding, by the media providing device, the multimedia stream through the first multimedia codec library, and packing the multimedia stream into a data packet suitable for terahertz wireless signal transmission through the first terahertz communication protocol after recoding; and
S12. sending, by the media providing device, the data packet from the first terahertz communication interface drive to the first terahertz transceiver, wherein the first terahertz transceiver externally broadcasts the data packet through the terahertz wireless signal.

In an embodiment, the step S2 specifically comprises the steps of:
S21. receiving, by the media receiving device, the terahertz wireless signal broadcast through the second terahertz transceiver, and acquiring the data packet, wherein the second terahertz transceiver sends the data packet to the second terahertz communication interface drive;
S22. reading, by the second terahertz communication interface drive, the data packet, wherein after the read data packet is unpacked and corrected by the second terahertz communication protocol stack, the read data packet is decoded and translated into a required image frame by the second multimedia codec library, and
S23. translating the image frame after being drawn by a graphics engine and processed by a display drive into a playable multimedia stream.

In an embodiment, the method further comprises a handshake stage before the step S1, which comprises the following steps of:
R1. searching, by the media receiving device, an available media providing device through the terahertz wireless signal;
R2. receiving, by the media receiving device, an available answering instruction sent out by the media providing device;
R3. sending out, by the media receiving device, an authentication code verification instruction to the media providing device; and
R4. receiving, by the media receiving device, an authentication code answering instruction sent out by the media providing device, and verifying the authentication code.

In an embodiment, the media receiving device is a terminal device having a screen display device.

A multimedia stream transmission system based on terahertz wireless communications, comprises:
- a media providing device, used for processing a multimedia stream into a data packet suitable for terahertz wireless signal transmission, and externally broadcasting the data packet through a terahertz wireless signal; and
- a media receiving device, used for receiving the data packet through a terahertz wireless signal, and processing the data packet into a playable multimedia stream.

In an embodiment, the media providing device comprises three function units: the first function unit, the second function unit and the third function unit, wherein:
- The first function unit is the first application operating interface used for user interactive operation;
- The second function unit comprises the first terahertz communication interface drive, the first terahertz communication protocol stack and the first multimedia codec library; the first terahertz communication interface drive is used for reading the data packet, the first terahertz communication protocol stack is used for packing the multimedia stream into the data packet, and the first multimedia codec library is used for decoding and recoding the multimedia stream; and
- The third function unit comprises the first terahertz transceiver used for receiving the data packet suitable for terahertz wireless signal transmission.

In an embodiment, the media receiving device comprises three function units: the fourth function unit, the fifth function unit and the sixth function unit, wherein:
- The fourth function unit is the second application operating interface used for user interactive operation;
- The fifth function unit comprises the second terahertz communication interface drive, the second terahertz communication protocol stack, the second multimedia codec library, a graphics engine and a display drive; the second terahertz communication interface drive is used for reading the data packet, the second terahertz communication protocol stack is used for unpacking and correcting the data packet, the second multimedia codec library is used for decoding and translating the data packet into a required image frame, and the graphics engine and the display drive are respectively used for drawing the image frame and processing the image frame into a playable multimedia stream; and
- The sixth function unit comprises the second terahertz transceiver and a display device; the second terahertz transceiver is used for receiving and sending the data packet suitable for terahertz wireless signal transmission, and the display device is used for playing and displaying the multimedia stream.

In an embodiment, the media providing device is a smartphone.

In an embodiment, the media providing device is a laptop computer.

In an embodiment, the media providing device is a personal digital assistant.

In an embodiment, the media receiving device is a projector.

In an embodiment, the media receiving device is a display device.

In an embodiment, the media receiving device is a television.

In an embodiment, the number of the media providing device is one, while the number of the media receiving device is at least one.

The present invention has the advantageous effects that: according to the multimedia stream transmission method and the system based on terahertz wireless communication of the present invention, the media providing device sends the multimedia stream through the terahertz wireless signal, and the media receiving device receives the multimedia stream in real time to accomplish the real-time broadcast and transmission of the multimedia stream. Through the transmission mode based on terahertz wireless communication, the present invention generally improves the transmission rate and quality of the multimedia stream, and the picture image of the present invention is far better than that of the traditional wired transmission mode and GHz frequency band wireless transmission mode.

The aforementioned characteristics, features and advantages of the invention as well as the way they are achieved will be further illustrated in connection with the following examples and considerations as discussed in view of the figures.
- FIG.1: is a flow chart of a preferred embodiment of a multimedia stream transmission method based on terahertz wireless communication according to the present invention.
- FIG.2: is a flow chart of a media providing device for externally broadcasting a multimedia stream in the multimedia stream transmission method based on terahertz wireless communication according to the present invention shown in FIG.1.
- FIG.3: is a flow chart of a media receiving device for receiving the multimedia stream in the multimedia stream transmission method based on terahertz wireless communication according to the present invention shown in FIG.1.
- FIG.4: is a flow chart of a handshake stage in the multimedia stream transmission method based on terahertz wireless communication according to the present invention shown in FIG.1.
- FIG.5: is a structure diagram of a preferred embodiment of a multimedia stream transmission system based on terahertz wireless communication according to the present invention.

The present invention provides a multimedia stream transmission method and a system based on terahertz wireless communication. To make the objective, technical solution and advantages of the present application more clear, the present invention is further described in details hereinafter. It should be understood that the specific embodiments described here are merely used for explaining the present invention, but are not intended to limit the present invention.

According to the multimedia stream transmission method based on terahertz wireless communication of the present invention, the media providing device provides the multimedia stream, processes the multimedia stream to translate the multimedia stream is translated into a data packet suitable for terahertz wireless link transmission, and then sends the data packet out. The multimedia receiving device receives the data packet through the terahertz wireless communications signal and processes the data packet into a playable multimedia stream, so that the multimedia stream may be played on various display devices.

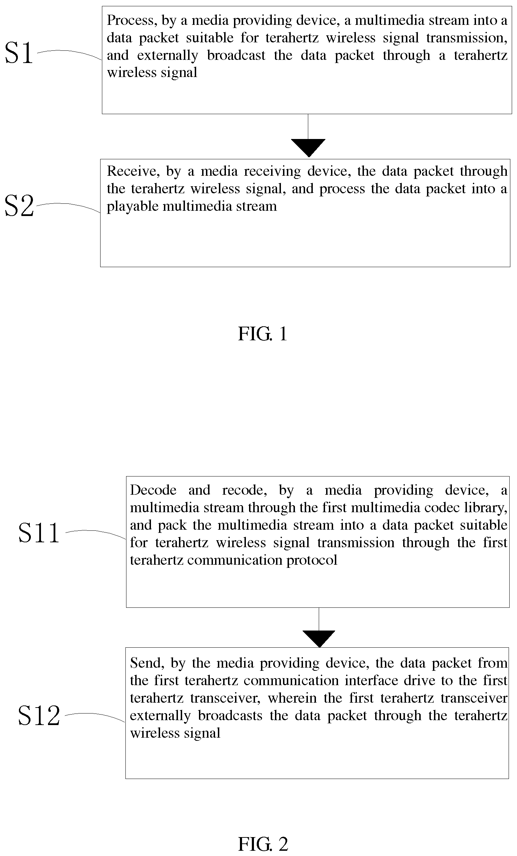

FIG.1 is a preferred embodiment of a multimedia stream transmission method based on terahertz wireless communication according to the present invention, which comprises the following steps of:
S1. processing, by a media providing device, a multimedia stream into a data packet suitable for terahertz wireless signal transmission, and externally broadcasting the data packet through a terahertz wireless signal, wherein:
   In the step, the media providing device may be a smartphone, a laptop computer, a PDA or other terminal device that may provide a multimedia stream. A multimedia stream requiring shared transmission is stored in the media providing device. The multimedia stream may be an audio or video file. A file format of the multimedia stream may be such common file formats as wmv, rm, rmvb, mpg, 3gp, mp4 or avi; before the multimedia stream is transmitted to the media receiving device through a terahertz wireless signal, the media providing device needs to process the multimedia stream into a data packet suitable for terahertz wireless signal transmission; in this way, the multimedia stream can be transmitted by using terahertz waves; and
S2. receiving, by a media receiving device, the data packet through a terahertz wireless signal, and processing the data packet into a playable multimedia stream, wherein:
   In this step, the media receiving device is preferably a terminal device with a big screen display device in order to achieve a better viewing effect; for example, the media receiving device may be a projector, a display device, a television or other terminal device that can play the multimedia stream. The media providing device may receive the data packet sent by the media providing device through the terahertz wireless signal; after receiving the data packet, the media providing device needs to process the data packet and translates the data packet into a playable multimedia stream for the media receiving device, and finally the multimedia stream is played on the display device in real time. Because the terahertz wireless communications has the advantages of large transmission capacity, rapid rate and better directionality, the multimedia stream shared transmission method based on terahertz wireless communication may implement smooth transmission of high definition lossless images, and may bring the user with fire-new experience of sharing screen between the multimedia devices. Furthermore, the multimedia stream may be played.

The data packet suitable for terahertz wireless signal transmission needs to be processed both in the foregoing steps S1 and S2, wherein for the specific processing procedure see below.

FIG.2 is a specific flow of a media providing device for externally broadcasting a multimedia stream in the embodiment, which comprises the following steps of:
S11. decoding, by the media providing device, the multimedia stream through the first multimedia codec library, and packing the multimedia stream into a data packet suitable for terahertz wireless signal transmission through the first terahertz communication protocol after recoding, wherein:
   The media providing device needs to decode and recode the multimedia stream, which is completed through the first multimedia codec library in the media providing device. Taking coding for example, the processing procedure is: first processing the multimedia stream into audio and video packed data through standard video coding and audio coding algorithm (namely a container technology), and then adding an information header that represents a coding format, thus forming a container packet; for decoding, the processing procedure is corresponding with the foregoing coding procedure, which namely parses the information header of the container packet first and acquires the audio and video packed data, and then unpacks the packed data into the multimedia stream; after the first multimedia codec library decodes and recodes the multimedia stream, the media providing device may pack the decoded and recoded data into a data packet suitable for terahertz wireless signal transmission through the first terahertz communication protocol stack, and the data packet is sent to the first terahertz communication interface drive; and
S12. sending, by the media providing device, the data packet from the first terahertz communication interface drive to the first terahertz transceiver, wherein the first terahertz transceiver externally broadcasts the data packet through the terahertz wireless signal, wherein:
   The first terahertz communication interface drive sends the data packet to the first terahertz transceiver. After receiving the data packet, the first terahertz transceiver may send the data packet to the media receiving device through the terahertz wireless signal, and then the media receiving device receive the data packet.

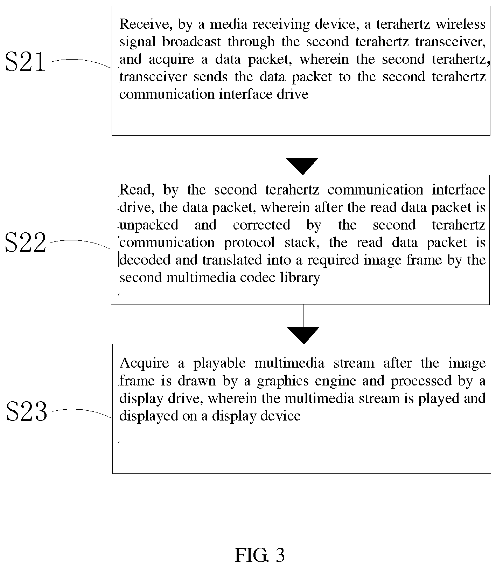

FIG.3 is a specific flow of a media receiving device for receiving the multimedia stream in the embodiment, which comprises the following steps of:
S21. receiving, by the media receiving device, the terahertz wireless signal broadcast sent by the first terahertz transceiver through the second terahertz transceiver, and acquiring the data packet, wherein the second terahertz transceiver sends the data packet to the second terahertz communication interface drive, wherein:
   The second terahertz transceiver and the second terahertz communication interface drive are arranged in the media receiving device; the structures and the principles of the second terahertz transceiver and the first terahertz transceiver are the same; the structures and the principles of the second terahertz communication interface drive and the first terahertz communication interface drive are also the same, with an opposite processing procedure of the data packet and the multimedia stream only; after receiving the terahertz wireless signal broadcast sent by the first terahertz transceiver and acquiring the data packet, the second terahertz transceiver may send the data packet to the second terahertz communication interface drive, and the second terahertz communication interface drive may perform following processing on the data packet;
S22. reading, by the second terahertz communication interface drive, the data packet, wherein after the read data packet is unpacked and corrected by the second terahertz communication protocol stack, the read data packet is decoded and translated into a required image frame by the second multimedia codec library, wherein:
   In the step, the second terahertz communication interface drive in the media receiving device reads the data packet; the data read by the second terahertz communication interface drive is unpacked and corrected through a terahertz communication protocol stack; the unpacked and corrected data is decoded through the second multimedia decoding library arranged in the media receiving device, and translated into a data frame; and
S23. translating the image frame, when being drawn by a graphics engine and processed by a display drive, into a playable multimedia stream, wherein the multimedia stream is played and displayed on a display device.

The graphics engine and the display drive are also arranged in the media receiving device. The graphics engine and the display drive may process the image frame, so that the image frame may be normally displayed and played on the display device. The image frame acquired after the second multimedia decoding library decodes and translates the data, may enable the multimedia stream to be stably played on the display device on the media receiving device through such drawing work as retouching and beautification of the graphics engine as well as displaying processing of the display drive.

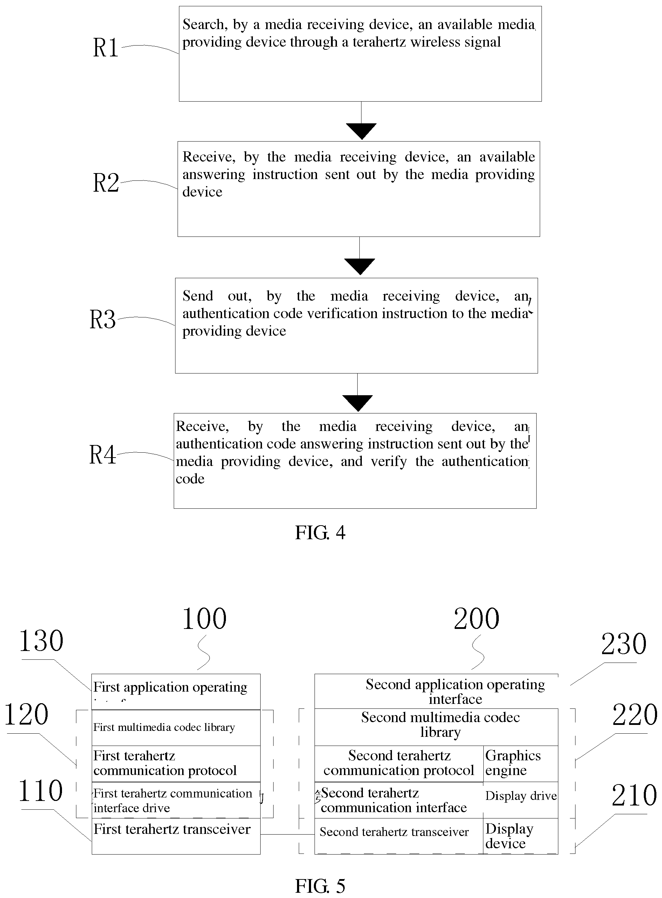

The present invention further comprises a handshake stage before the media providing device transmits the multimedia stream data to the media receiving device, in order to perform such necessary steps as search and validation prior to transmission, wherein the main procedure of the handshake stage is as shown in FIG.4, comprising the following steps of:
R1. searching, by the media receiving device, an available media providing device through a terahertz wireless link;
R2. receiving, by the media receiving device, an available answering instruction sent out by the media providing device;
R3. sending out, by the media receiving device, an authentication code verification instruction to the media providing device; and
R4. receiving, by the media receiving device, an authentication code answering instruction sent out by the media providing device, wherein the next data transmission step may be entered after successful authentication and verification of the media receiving device and the media providing device.

The foregoing handshake stage has the functions of protecting the data transmission and recognizing a transmission device. The media receiving device needs to recognize an available media providing device in advance, and then performs the authentication code verification step after receiving the available answering sent out by the media providing device. The multimedia stream transmission procedure can be entered after the verification procedure of the handshake stage is completed and the authentication code used for protecting the data transmission is established.

A data transmission stage is entered after the handshake stage is completed. The data transmission stage mainly comprises that: the media providing device sends the information of the multimedia stream to the media receiving device through the terahertz wireless signal; after receiving the multimedia stream playable answering the media providing device sent out by the media receiving device, may perform transmission; that is, the media providing device sends the multimedia stream data to the media receiving device through the terahertz wireless signal.

When the media receiving device does not need to play the multimedia stream, the media receiving device may initiatively send out an instruction of stopping receiving the multimedia stream data; after receiving the instruction, the media providing device answers the instruction and stops sending the multimedia stream data; and the data transmission is ended.

The present invention also provides a multimedia stream transmission system based on terahertz wireless communication. As shown in FIG.5, the system mainly comprises:
- a media providing device 100, used for processing a multimedia stream into a data packet suitable for terahertz wireless signal transmission, and externally broadcasting the data packet through a terahertz wireless signal; and
- a media receiving device 200, used for receiving the data packet through a terahertz wireless signal, and processing the data packet into a playable multimedia stream.

The media receiving device 100 comprises three function units: the first function unit 130, the second function unit 120 and the third function unit 110.

The first function unit 130 is the first application operating interface used for user interactive operation. The second function unit 120 comprises the first terahertz communication interface drive, the first terahertz communication protocol stack and the first multimedia codec library. The first terahertz communication interface drive is used for reading the data packet, the first terahertz communication protocol stack is used for packing the multimedia stream into the data packet, and the first multimedia codec library is used for decoding and recoding the multimedia stream. The third function unit 110 comprises the first terahertz transceiver used for receiving the data packet suitable for terahertz wireless signal transmission.

The working flow of the media providing device 100 is: a user selects and transmits a multimedia stream required to be transmitted for sharing at the first application operating interface, wherein the multimedia stream after being decoded and recoded by the first multimedia codec library is sent to the first terahertz protocol stack; the first terahertz protocol stack packs the multimedia stream into a data packet suitable for terahertz wireless signal transmission; the data packet is sent to the first terahertz transceiver by the first terahertz communication interface drive and broadcast externally by the first terahertz transceiver through the terahertz wireless signal.

The media receiving device 200 comprises three function units: the fourth function unit 230, the fifth function unit 220 and the sixth function unit 210.

The fourth function unit 230 is the second application operating interface used for user interactive operation. The fifth function unit 220 comprises the second terahertz communication interface drive, the second terahertz communication protocol stack, the second multimedia codec library, a graphics engine and a display drive. The second terahertz communication interface drive is used for reading the data packet, the second terahertz communication protocol stack is used for unpacking and correcting the data packet, the second multimedia codec library is used for decoding and translating the data packet into a required image frame, and the graphics engine and the display drive are respectively used for drawing the image frame and processing the image frame into a playable multimedia stream. The sixth function unit 210 comprises the second terahertz transceiver and a display device. The second terahertz transceiver is used for receiving and sending the data packet suitable for terahertz wireless signal transmission, and the display device is used for playing and displaying the multimedia stream.

The working flow of the media receiving device is: the second terahertz transceiver receives the data packet and the data packet is read through the second terahertz communication interface drive. The read data packet after being unpacked and corrected by the second terahertz protocol stack, is sent to the second multimedia codec library to decode and translate into a required image frame. After being drawn by the graphics engine and processed by the display drive, the image frame finally plays the multimedia stream on the display device. Certainly, the user may also adjust the playing procedure of the multimedia stream on a user operating interface, for example, adjusting the playing picture quality of the multimedia stream, or pausing or breaking the playing procedure of the multimedia stream.

The media providing device is a smartphone, a laptop computer or a PDA. The media receiving device is a projector, a display device or a television. The user can implement to play a video or audio file on a big screen on the media receiving device in real time by only sending a multimedia stream file on the media providing device to the media receiving device through the terahertz wireless signal, thus greatly improving the user experience.

The number of the media providing device is one, while the number of the media receiving device is greater than one. In this way, it evolves into a broadcasting stream media. The multimedia stream transmission mode in the present invention may enable the user to receive the data packet and watch or listen to the video or audio file at the same time without waiting for that the entire multimedia stream file is transmitted to the media receiving device.

According to the multimedia stream transmission method and the system based on terahertz wireless communication of the present invention, the media providing device sends the multimedia stream through the terahertz wireless signal, and the media receiving device receives the multimedia stream in real time, so as to achieve the real-time broadcast and transmission of the multimedia stream. In the present invention, the multimedia stream transmission rate may reach 10Gps above and only 30% band width is occupied even for 1080/24 bit true color non-packing transmission. The high band width and full digitization multimedia stream transmission mode of the present invention are far better than the current wired transmission mode and GHz frequency band wireless transmission mode on the aspect of picture quality. Moreover, the present invention does not need wired connection and does not need to trepan a shell of the device, thus saving certain mainboard space, and avoiding the use of a physical connector. In addition, the present invention avoids the use of cables, so that the user is more convenient to use; therefore, the present invention is more humanized. Furthermore, the present invention may also form a broadcasting type stream media transmission mode and one media providing device can share a multimedia stream image to multiple media receiving devices without hardware improvement, which cannot be implemented by the traditional transmission mode.

It should be understood that applications of the present invention are not limited to the foregoing examples. A person having ordinary skill in the art may improve or transform the present invention according to the foregoing descriptions. All improvements and transformations shall fall within the protection scope of the claims of the present invention.

## Claims

1. A multimedia stream transmission method based on terahertz wireless communication, comprising the following steps of:
S1. processing, by a media providing device, a multimedia stream into a data packet suitable for terahertz wireless signal transmission, and sending the data packet from the first terahertz communication interface drive to the first terahertz transceiver, wherein the first terahertz transceiver externally broadcasts the data packet through a terahertz wireless signal; and
S2. receiving, by a media receiving device, the terahertz wireless signal broadcast through the second terahertz transceiver, and acquiring the data packet, wherein after the second terahertz transceiver sends the data packet to the second terahertz communication interface drive, the media receiving device processes the data packet into a playable multimedia stream,
wherein the step S1 further comprises the step of:
S11. decoding, by the media providing device, the multimedia stream through the first multimedia codec library, and packing the multimedia stream into a data packet suitable for terahertz wireless signal transmission through the first terahertz communication protocol after recoding,
wherein the step S2 further comprises the steps of:
S22. reading, by the second terahertz communication interface drive, the data packet, wherein after the read data packet is unpacked and corrected by the second terahertz communication protocol stack, the read data packet is decoded and translated into a required image frame by the second multimedia codec library; and
S23. translating the image frame, after being drawn by a graphics engine and processed by a display drive, into a playable multimedia stream,
wherein the method further comprises a handshake stage before the step S1, which comprises the following steps of:
R1. searching, by the media receiving device, an available media providing device through the terahertz wireless signal;
R2. receiving, by the media receiving device, an available answering instruction sent out by the media providing device;
R3. sending out, by the media receiving device, an authentication code verification instruction to the media providing device; and
R4. receiving, by the media receiving device, an authentication code answering instruction sent out by the media providing device, and verifying the authentication code, and
wherein the media providing device is a smartphone, a laptop computer or a personal digital assistant that broadcasts the multimedia stream to multiple media receiving devices.

2. The multimedia stream transmission method based on terahertz wireless communication according to claim 1, wherein the step S1 further comprises the step of:
S12. sending, by the media providing device, the data packet from the first terahertz communication interface drive to the first terahertz transceiver, wherein the first terahertz transceiver externally broadcasts the data packet through the terahertz wireless signal.

3. The multimedia stream transmission method based on terahertz wireless communication according to any of the preceding claims, wherein the step S2 further comprises the step of:
S21. receiving, by the media receiving device, the terahertz wireless signal broadcast through the second terahertz transceiver, and acquiring the data packet, wherein the second terahertz transceiver sends the data packet to the second terahertz communication interface drive.

4. The multimedia stream transmission method based on terahertz wireless communication according to any of the preceding claims, wherein the media receiving device is a terminal device having a screen display device.

5. A multimedia stream transmission system based on terahertz wireless communication, comprising:
- A media providing device, used for processing a multimedia stream into a data packet suitable for terahertz wireless signal transmission, and externally broadcasting the data packet through a terahertz wireless signal, wherein the media providing device is a smartphone, a laptop computer or a personal digital assistant that is adapted to broadcast a multimedia stream to multiple media receiving devices; and
- The multiple media receiving devices, each used for receiving the data packet through a terahertz wireless signal, and processing the data packet into a playable multimedia stream,
wherein the media providing device comprises three function units: the first function unit, the second function unit and the third function unit, wherein:
- The first function unit is the first application operating interface used for user interactive operation;
- The second function unit comprises the first terahertz communication interface drive, the first terahertz communication protocol stack and the first multimedia codec library; the first terahertz communication interface drive is used for reading the data packet, the first terahertz communication protocol stack is used for packing the multimedia stream into the data packet, and the first multimedia codec library is used for decoding and recoding the multimedia stream; and
- The third function unit comprises the first terahertz transceiver used for receiving the data packet suitable for terahertz wireless signal transmission
wherein the media receiving device comprises three further function units: the fourth function unit, the fifth function unit and the sixth function unit, wherein:
- The fourth function unit is the second application operating interface used for user interactive operation;
- The fifth function unit comprises the second terahertz communication interface drive, the second terahertz communication protocol stack, the second multimedia codec library, a graphics engine and a display drive; the second terahertz communication interface drive is used for reading the data packet, the second terahertz communication protocol stack is used for unpacking and correcting the data packet, the second multimedia codec library is used for decoding and translating the data packet into a required image frame, and the graphics engine and the display drive are respectively used for drawing the image frame and processing the image frame into a playable multimedia stream; and
- The sixth function unit comprises the second terahertz transceiver and a display device; the second terahertz transceiver is used for receiving and sending the data packet suitable for terahertz wireless signal transmission, and the display device is used for playing and displaying the multimedia stream,
wherein the system is further adapted to perform the following steps of:
- R1. searching, by the media receiving devices, an available media providing device through the terahertz wireless signal;
- R2. receiving, by the media receiving devices, an available answering instruction sent out by the media providing device;
- R3. sending out, by the media receiving device, an authentication code verification instruction to the media providing devices; and
- R4. receiving, by the media receiving devices, an authentication code answering instruction sent out by the media providing device, and verifying the authentication code.

6. The multimedia stream transmission system based on terahertz wireless communication according to claim 5, wherein the media receiving device is a projector, a display device or a television.

## Patentansprüche

1. Multimedia-Stream-Übertragungsverfahren auf Basis von drahtloser Terahertz-Kommunikation, umfassend die folgenden Schritte:
S1. Verarbeiten, durch eine Medienbereitstellungsvorrichtung, eines Multimedia-Streams in ein Datenpaket, das für drahtlose Terahertz-Signalübertragung geeignet ist, und Senden des Datenpakets von der ersten Terahertz-Kommunikationsschnittstellenansteuerung zum ersten Terahertz-Sender-Empfänger, wobei der erste Terahertz-Sender-Empfänger das Datenpaket über ein drahtloses Terahertz-Signal nach außen ausstrahlt; und
S2. Empfangen, durch eine Medienempfangsvorrichtung, des drahtlosen Terahertz-Signals, das durch den zweiten Terahertz-Sender-Empfänger ausgestrahlt wird, und Erlangen des Datenpakets, wobei, nachdem der zweite Terahertz-Sender-Empfänger das Datenpaket an die zweite Terahertz-Kommunikationsschnittstellenansteuerung sendet, die Medienempfangsvorrichtung das Datenpaket zu einem wiedergabefähigen Multimedia-Stream verarbeitet,
wobei der Schritt S1 ferner den folgenden Schritt umfasst:
S11. Dekodieren, durch die Medienbereitstellungsvorrichtung, des Multimedia-Streams durch die erste Multimedia-Codec-Bibliothek, und Packen des Multimedia-Streams in ein Datenpaket, das für drahtlose Terahertz-Signalübertragung durch das erste Terahertz-Kommunikationsprotokoll nach Umkodierung geeignet ist, wobei der Schritt S2 ferner die folgenden Schritte umfasst:
S22. Lesen, durch die zweite Terahertz-Kommunikationsschnittstellenansteuerung, des Datenpakets, wobei nach dem Entpacken und Korrigieren des gelesenen Datenpakets durch den zweiten Terahertz-Kommunikationsprotokollstapel das gelesene Datenpaket durch die zweite Multimedia-Codec-Bibliothek dekodiert und in einen benötigten Bildrahmen übersetzt wird; und
S23. Übersetzen des Bildrahmens, nachdem er von einer Grafik-Engine gezeichnet und von einer Anzeigeansteuerung verarbeitet wurde, in einen wiedergabefähigen Multimedia-Stream,
wobei das Verfahren ferner eine Handshake-Stufe vor dem Schritt S1 umfasst, die die folgenden Schritte umfasst:
R1. Suchen, durch die Medienempfangsvorrichtung, nach einer verfügbaren Medienbereitstellungsvorrichtung über das drahtlose Terahertz-Signal;
R2. Empfangen, durch die Medienempfangsvorrichtung, einer verfügbaren Antwortanweisung, die von der Medienbereitstellungsvorrichtung ausgesendet wird;
R3. Aussenden, durch die Medienempfangsvorrichtung, einer Authentifizierungscode-Verifizierungsanweisung an die Medienbereitstellungsvorrichtung; und
R4. Empfangen, durch die Medienempfangsvorrichtung, einer Authentifizierungscode-Antwortanweisung, die von der Medienbereitstellungsvorrichtung ausgesendet wird, und Verifizieren des Authentifizierungscodes, und
wobei die Medienbereitstellungsvorrichtung ein Smartphone, ein Laptop-Computer oder ein persönlicher digitaler Assistent ist, der den Multimedia-Stream an mehrere Medienempfangsvorrichtungen ausstrahlt.

2. Multimedia-Stream-Übertragungsverfahren auf Basis von drahtloser Terahertz-Kommunikation nach Anspruch 1, wobei der Schritt S1 ferner den folgenden Schritt umfasst:
S12. Senden, durch die Medienbereitstellungsvorrichtung, des Datenpakets von der ersten Terahertz-Kommunikationsschnittstellenansteuerung an den ersten Terahertz-Sender-Empfänger, wobei der erste Terahertz-Sender-Empfänger das Datenpaket über das drahtlose Terahertz-Signal nach außen ausstrahlt.

3. Multimedia-Stream-Übertragungsverfahren auf Basis von drahtloser Terahertz-Kommunikation nach einem der vorhergehenden Ansprüche, wobei der Schritt S2 ferner den folgenden Schritt umfasst:
S21. Empfangen, durch die Medienempfangsvorrichtung, des drahtlosen Terahertz-Signals, das durch den zweiten Terahertz-Sender-Empfänger abgestrahlt wird, und Erlangen des Datenpakets, wobei der zweite Terahertz-Sender-Empfänger das Datenpaket an die zweite Terahertz-Kommunikationsschnittstellenansteuerung sendet.

4. Multimedia-Stream-Übertragungsverfahren auf Basis von drahtloser Terahertz-Kommunikation nach einem der vorhergehenden Ansprüche, wobei die Medienempfangsvorrichtung ein Endgerät mit einem Bildschirmanzeigegerät ist.

5. Multimedia-Stream-Übertragungssystem auf Basis von drahtloser Terahertz-Kommunikation, umfassend:
- eine Medienbereitstellungsvorrichtung, die zum Verarbeiten eines Multimedia-Streams in ein Datenpaket verwendet wird, das für drahtlose Terahertz-Signalübertragung geeignet ist, und zum Ausstrahlen des Datenpakets nach außen durch ein drahtloses Terahertz-Signal, wobei die Medienbereitstellungsvorrichtung ein Smartphone, ein Laptop-Computer oder ein persönlicher digitaler Assistent ist, der zum Senden eines Multimedia-Streams an mehrere Medienempfangsvorrichtungen eingerichtet ist; und
- die mehreren Medienempfangsvorrichtungen, die jeweils für das Empfangen des Datenpakets über ein drahtloses Terahertz-Signal und das Verarbeiten des Datenpakets in einen wiedergabefähigen Multimedia-Stream verwendet werden,
wobei die Medienbereitstellungsvorrichtung drei Funktionseinheiten umfasst: die erste Funktionseinheit, die zweite Funktionseinheit und die dritte Funktionseinheit, wobei:
- die erste Funktionseinheit die erste Anwendungsbedienschnittstelle ist, die für einen interaktiven Betrieb durch den Benutzer verwendet wird;
- die zweite Funktionseinheit die erste Terahertz-Kommunikationsschnittstellenansteuerung, den ersten Terahertz-Kommunikationsprotokollstapel und die erste Multimedia-Codec-Bibliothek umfasst; die erste Terahertz-Kommunikationsschnittstellenansteuerung zum Lesen des Datenpakets verwendet wird, der erste Terahertz-Kommunikationsprotokollstapel zum Packen des Multimedia-Streams in das Datenpaket verwendet wird, und die erste Multimedia-Codec-Bibliothek zum Dekodieren und Rekodieren des Multimedia-Streams verwendet wird; und
- die dritte Funktionseinheit den ersten Terahertz-Sender-Empfänger, der zum Empfangen des für die drahtlose Terahertz-Signalübertragung geeigneten Datenpakets verwendet wird, umfasst,
wobei die Medienempfangsvorrichtung drei weitere Funktionseinheiten umfasst: die vierte Funktionseinheit, die fünfte Funktionseinheit und die sechste Funktionseinheit, wobei:
- die vierte Funktionseinheit die zweite Anwendungsbedienschnittstelle ist, die für den interaktiven Betrieb durch den Benutzer verwendet wird;
- die fünfte Funktionseinheit die zweite Terahertz-Kommunikationsschnittstellenansteuerung, den zweiten Terahertz-Kommunikationsprotokollstapel, die zweite Multimedia-Codec-Bibliothek, eine Grafik-Engine und eine Anzeigeansteuerung umfasst; die zweite Terahertz-Kommunikationsschnittstellenansteuerung zum Lesen des Datenpakets verwendet wird, der zweite Terahertz-Kommunikationsprotokollstapel zum Entpacken und Korrigieren des Datenpakets verwendet wird, die zweite Multimedia-Codec-Bibliothek zum Dekodieren und Übersetzen des Datenpakets in einen benötigten Bildrahmen verwendet wird und die Grafik-Engine und die Anzeigeansteuerung jeweils zum Zeichnen des Bildrahmens und zum Verarbeiten des Bildrahmens in einen wiedergabefähigen Multimedia-Stream verwendet werden; und
- die sechste Funktionseinheit den zweiten Terahertz-Sender-Empfänger und ein Anzeigegerät umfasst; der zweite Terahertz-Sender-Empfänger zum Empfangen und Senden des für drahtlose Terahertz-Signalübertragung geeigneten Datenpakets verwendet wird und das Anzeigegerät zum Wiedergeben und Anzeigen des Multimedia-Streams verwendet wird,
wobei das System ferner dazu eingerichtet ist, die folgenden Schritte auszuführen:
- R1. Suchen, durch die Medienempfangsvorrichtungen, nach einer verfügbaren Medienbereitstellungsvorrichtung über das drahtlose Terahertz-Signal;
- R2. Empfangen, durch die Medienempfangsvorrichtungen, einer verfügbaren Antwortanweisung, die von der Medienbereitstellungsvorrichtung ausgesendet wird;
- R3. Aussenden, durch die Medienempfangsvorrichtungen, einer Authentifizierungscode-Verifizierungsanweisung an die Medienbereitstellungsvorrichtung; und
- R4. Empfangen, durch die Medienempfangsvorrichtungen, einer Authentifizierungscode-Antwortanweisung, die von der Medienbereitstellungsvorrichtung ausgesendet wird, und Verifizieren des Authentifizierungscodes.

6. Multimedia-Stream-Übertragungssystem auf Basis von drahtloser Terahertz-Kommunikation nach Anspruch 5, wobei die Medienempfangsvorrichtung ein Projektor, ein Anzeigegerät oder ein Fernsehgerät ist.

## Revendications

1. Procédé de transmission de flux multimédia basé sur une communication sans fil par ondes térahertziennes, comportant les étapes suivantes de :
S1. traitement, par un dispositif fournisseur de média, d'un flux multimédia pour obtenir un paquet de données convenant pour une transmission par signal sans fil en ondes térahertziennes, et envoi du paquet de données de la première commande d'interface de communication par ondes térahertziennes au premier émetteur-récepteur térahertzien, le premier émetteur-récepteur térahertzien diffusant extérieurement le paquet de données par l'intermédiaire d'un signal sans fil en ondes térahertziennes ; et
S2. réception, par un dispositif récepteur de média, du signal sans fil en ondes térahertziennes diffusé par l'intermédiaire du deuxième émetteur-récepteur térahertzien, et acquisition du paquet de données, **caractérisé en ce qu'**après que le deuxième émetteur-récepteur térahertzien a envoyé le paquet de données à la deuxième commande d'interface de communication par ondes térahertziennes, le dispositif récepteur de média traite le paquet de données pour obtenir un flux multimédia lisible,
l'étape S1 comportant en outre l'étape de :
S11. décodage, par le dispositif fournisseur de média, du flux multimédia par l'intermédiaire de la première bibliothèque de codecs multimédia, et emballage du flux multimédia pour obtenir un paquet de données convenant pour une transmission par signal sans fil en ondes térahertziennes par l'intermédiaire du premier protocole de communication par ondes térahertziennes après recodage,
l'étape S2 comportant en outre les étapes de :
S22. lecture, par la deuxième commande d'interface de communication par ondes térahertziennes, du paquet de données, **caractérisé en ce qu'**après que le paquet de données lu a été déballé et corrigé par la deuxième pile de protocole de communication par ondes térahertziennes, le paquet de données lu est décodé et traduit en une trame d'image requise par la deuxième bibliothèque de codecs multimédia ; et
S23. traduction de la trame d'image, après qu'elle a été tracée par un moteur graphique et traitée par une commande d'affichage, en un flux multimédia lisible,
le procédé comportant en outre un stade de prise de contact avant l'étape S1, qui comporte les étapes suivantes de :
R1. recherche, par le dispositif récepteur de média, d'un dispositif fournisseur de média disponible par l'intermédiaire du signal sans fil en ondes térahertziennes ;
R2. réception, par le dispositif récepteur de média, d'une instruction de réponse de disponibilité émise par le dispositif fournisseur de média ;
R3. envoi, par le dispositif récepteur de média, d'une instruction de confirmation de code d'authentification au dispositif fournisseur de média ; et
R4. réception, par le dispositif récepteur de média, d'une instruction de réponse de code d'authentification émise par le dispositif fournisseur de média, et confirmation du code d'authentification, et
le dispositif fournisseur de média étant un ordiphone, un ordinateur portable ou un assistant numérique personnel qui diffuse le flux multimédia à de multiples dispositifs récepteurs de média.

2. Procédé de transmission de flux multimédia basé sur une communication sans fil par ondes térahertziennes selon la revendication 1, l'étape S1 comportant en outre l'étape de :
S12. envoi, par le dispositif fournisseur de média, du paquet de données de la première commande d'interface de communication par ondes térahertziennes au premier émetteur-récepteur térahertzien, le premier émetteur-récepteur térahertzien diffusant extérieurement le paquet de données par l'intermédiaire du signal sans fil en ondes térahertziennes.

3. Procédé de transmission de flux multimédia basé sur une communication sans fil par ondes térahertziennes selon l'une quelconque des revendications précédentes, l'étape S2 comportant en outre l'étape de :
S21. réception, par le dispositif récepteur de média, du signal sans fil en ondes térahertziennes diffusé par l'intermédiaire du deuxième émetteur-récepteur térahertzien, et acquisition du paquet de données, le deuxième émetteur-récepteur térahertzien envoyant le paquet de données à la deuxième commande d'interface de communication par ondes térahertziennes.

4. Procédé de transmission de flux multimédia basé sur une communication sans fil par ondes térahertziennes selon l'une quelconque des revendications précédentes, le dispositif récepteur de média étant un dispositif terminal doté d'un dispositif d'affichage sur écran.

5. Système de transmission de flux multimédia basé sur une communication sans fil par ondes térahertziennes, comportant :
- un dispositif fournisseur de média, utilisé pour traiter un flux multimédia de façon à obtenir un paquet de données convenant pour une transmission par signal sans fil en ondes térahertziennes, et diffuser extérieurement le paquet de données par l'intermédiaire d'un signal sans fil en ondes térahertziennes, le dispositif fournisseur de média étant un ordiphone, un ordinateur portable ou un assistant numérique personnel qui est conçu pour diffuser un flux multimédia à de multiples dispositifs récepteurs de média ; et
- les multiples dispositifs récepteurs de média, dont chacun est utilisé pour recevoir le paquet de données par l'intermédiaire d'un signal sans fil en ondes térahertziennes, et traiter le paquet de données pour donner un flux multimédia lisible,
le dispositif fournisseur de média comportant trois unités de fonction : la première unité de fonction, la deuxième unité de fonction et la troisième unité de fonction :
- la première unité de fonction étant la première interface d'exploitation d'application utilisée pour une exploitation interactive par un utilisateur ;
- la deuxième unité de fonction comportant la première commande d'interface de communication par ondes térahertziennes, la première pile de protocole de communication par ondes térahertziennes et la première bibliothèque de codecs multimédia ; la première commande d'interface de communication par ondes térahertziennes étant utilisée pour lire le paquet de données, la première pile de protocole de communication par ondes térahertziennes étant utilisée pour emballer le flux multimédia de façon à obtenir le paquet de données, et la première bibliothèque de codecs multimédia étant utilisée pour décoder et recoder le flux multimédia ; et
- la troisième unité de fonction comportant le premier émetteur-récepteur térahertzien utilisé pour recevoir le paquet de données convenant pour une transmission par signal sans fil en ondes térahertziennes,
le dispositif récepteur de média comportant trois unités de fonction supplémentaires : la quatrième unité de fonction, la cinquième unité de fonction et la sixième unité de fonction :
- la quatrième unité de fonction étant la deuxième interface d'exploitation d'application utilisée pour une exploitation interactive par l'utilisateur ;
- la cinquième unité de fonction comportant la deuxième commande d'interface de communication par ondes térahertziennes, la deuxième pile de protocole de communication par ondes térahertziennes, la deuxième bibliothèque de codecs multimédia, un moteur graphique et une commande d'affichage ; la deuxième commande d'interface de communication par ondes térahertziennes étant utilisée pour lire le paquet de données, la deuxième pile de protocole de communication par ondes térahertziennes étant utilisée pour déballer et corriger le paquet de données, la deuxième bibliothèque de codecs multimédia étant utilisée pour décoder et traduire le paquet de données en une trame d'image requise, et le moteur graphique et la commande d'affichage étant respectivement utilisés pour tracer la trame d'image et traiter la trame d'image pour donner un flux multimédia lisible ; et
- la sixième unité de fonction comportant le deuxième émetteur-récepteur térahertzien et un dispositif d'affichage ; le deuxième émetteur-récepteur térahertzien étant utilisée pour recevoir et émettre le paquet de données convenant pour une transmission par signal sans fil en ondes térahertziennes, et le dispositif d'affichage étant utilisé pour lire et afficher le flux multimédia,
le système étant en outre conçu pour réaliser les étapes suivantes de :
- R1. recherche, par le dispositif récepteur de média, d'un dispositif fournisseur de média disponible par l'intermédiaire du signal sans fil en ondes térahertziennes ;
- R2. réception, par le dispositif récepteur de média, d'une instruction de réponse de disponibilité émise par le dispositif fournisseur de média ;
- R3. envoi, par le dispositif récepteur de média, d'une instruction de confirmation de code d'authentification au dispositif fournisseur de média ; et
- R4. réception, par les dispositifs récepteurs de média, d'une instruction de réponse de code d'authentification émise par le dispositif fournisseur de média, et confirmation du code d'authentification.

6. Système de transmission de flux multimédia basé sur une communication sans fil par ondes térahertziennes selon la revendication 5, le dispositif récepteur de média étant un projecteur, un dispositif d'affichage ou un téléviseur.
